# FASCICULE DE BREVET EUROPEEN

(11) **EP 4 392 843 B1**
(45) Date de publication et mention de la délivrance du brevet: **08.10.2025**
(21) Numéro de dépôt: 22757264.1
(22) Date de dépôt: 25.07.2022
(51) Int. Cl.: G05D 1/00, B60W 40/02, G06V 20/56

(54) **PROCÉDÉ DE MODÉLISATION D'UN ENVIRONNEMENT DE NAVIGATION D'UN VÉHICULE AUTOMOBILE**
VERFAHREN ZUR MODELLIERUNG EINER NAVIGATIONSUMGEBUNG EINES KRAFTFAHRZEUGS
METHOD FOR MODELLING A NAVIGATION ENVIRONMENT OF A MOTOR VEHICLE

(30) Priorité: 25.08.2021 FR 2108909
(43) Date de publication de la demande: 03.07.2024
(73) Titulaire: RENAULT s.a.s., 78084 Guyancourt Cedex (FR)
(72) Inventeur: ARMAND, Alexandre, 78084 Guyancourt (FR); IBANEZ-GUZMAN, Javier, 78084 Guyancourt (FR)
(86) Numéro de dépôt international: PCT/EP2022/070730
(87) Numéro de publication internationale: WO 2023/025490

(56) Documents cités:
- EP-A1- 3 543 906
- US-A1- 2020 331 495
- US-A1- 2021 216 076

## Description

L'invention concerne un procédé de modélisation d'un environnement de navigation d'un véhicule automobile. L'invention porte encore sur un dispositif de modélisation d'un environnement de navigation d'un véhicule automobile. L'invention porte également sur un programme d'ordinateur mettant en œuvre le procédé mentionné. L'invention porte enfin sur un support d'enregistrement sur lequel est enregistré un tel programme.

Un véhicule autonome est amené à prendre des décisions en permanence, par rapport à la situation dans laquelle il se trouve. La détermination de la situation dans laquelle le véhicule autonome se trouve est donc primordiale pour la prise de décision. La situation dans laquelle se trouve le véhicule est classiquement obtenue par des moyens de perception de l'environnement du véhicule, tels que des lidars, des radars ou des caméras. Ceux-ci fournissent un très grand nombre de données dont une grande partie n'est pas utile pour décrire la situation dans laquelle se trouve le véhicule dans l'optique de prendre une décision. Une autre partie de ces données peut comprendre des erreurs ou des imprécisions. Enfin, bien que les véhicules automobiles embarquent un nombre toujours plus important de moyens de perception de l'environnement, certaines données peuvent être manquantes pour décrire une situation.

On connaît du document US10860022 un procédé s'adaptant à la situation dans laquelle le véhicule autonome se trouve, notamment en identifiant les informations clés contenues dans les données issues des moyens de perception du véhicule. Toutefois, cette solution présente des inconvénients, en particulier dans la gestion de la cohérence et de la fiabilité des informations.

La demande de brevet US 2020/0331495 A1 décrit un système de pilotage d'un véhicule autonome comportant une pluralité de capteurs de natures différentes, dans lequel des calculateurs déterminent des informations de conduite en fonction des données délivrées par lesdits capteurs. La solution décrite n'est pas optimale en ce qui concerne le traitement des données des capteurs.

Le but de l'invention est de fournir un dispositif et un procédé de modélisation d'un environnement de navigation d'un véhicule automobile remédiant aux inconvénients ci-dessus et améliorant les dispositifs et procédés de modélisation d'un environnement de navigation d'un véhicule automobile connus de l'art antérieur. En particulier, l'invention permet de réaliser un dispositif et un procédé qui soient simples et fiables et qui permettent une modélisation fiable, cohérente et pertinente d'un environnement de navigation d'un véhicule automobile.

A cet effet, l'invention porte sur un procédé de modélisation d'un environnement de navigation d'un véhicule équipé de moyens de perception de l'environnement, d'un module de décision et d'un moyen de contrôle autonome du véhicule, comprenant les étapes suivantes :
- une étape de définition d'un modèle environnemental global du véhicule comme étant un ensemble d'informations structuré construit à partir de données fournies par les moyens de perception de l'environnement,
- une étape de réception, de la part du module de décision, d'une requête d'informations relatives à une décision à prendre pour le contrôle du véhicule par le moyen de contrôle autonome,
- une étape de détermination, parmi l'ensemble d'informations structuré définissant le modèle environnemental, d'une sélection d'informations à renseigner pour prendre ladite décision,
- une étape de renseignement des informations de ladite sélection à partir du modèle environnemental global,
- une étape de détermination d'un indice d'intégrité associé à chacune des informations de ladite sélection,
- une étape de fourniture audit module de décision d'un modèle environnemental sélectif contenant les informations de ladite sélection et les indices d'intégrité correspondants.

Le procédé peut comprendre une étape d'acquisition d'au moins une première information de ladite sélection d'informations avec un premier moyen de perception de l'environnement et avec un deuxième moyen de perception de l'environnement, et l'indice d'intégrité associé à ladite au moins une première information peut être déterminé en fonction de la cohérence entre des données fournies par le premier moyen de perception et le deuxième moyen de perception.

Le procédé peut comprendre une étape d'acquisition d'au moins une deuxième information de ladite sélection d'informations avec un moyen de perception de l'environnement à un premier instant et à un deuxième instant postérieur au premier instant, et l'indice d'intégrité associé à ladite au moins une deuxième information peut être déterminé en fonction de la cohérence entre les données fournies par le moyen de perception au premier instant et au deuxième instant.

La décision à prendre peut comprendre une action donnée à appliquer par le véhicule autonome à une échéance donnée, l'échéance donnée pouvant être à court terme, à moyen terme, ou à long terme,
et pour une même action donnée, l'étape de détermination peut déterminer
   - une première sélection d'information à renseigner si l'échéance donnée est à court terme, ou
   - une deuxième sélection d'information à renseigner si l'échéance donnée est à moyen terme, ou
   - une troisième sélection d'information à renseigner si l'échéance données est à long terme,
et les première, deuxième et troisième sélections peuvent différer les unes des autres.

Le procédé peut comprendre une sous-étape de fourniture audit module de décision d'un modèle environnemental sélectif comprenant un ensemble d'informations caractérisant la situation du véhicule après l'application de la décision à prendre.

Le procédé peut comprendre :
- un paramétrage d'une liste finie de décisions prises en compte par le procédé,
- un paramétrage d'une sélection d'informations à renseigner pour chaque décision de la liste finie de décision, et un paramétrage de l'ordre dans lequel lesdites informations doivent être renseignées,
- un paramétrage d'au moins une méthode de renseignement de chaque information à renseigner.

L'invention porte également sur un dispositif de modélisation d'un environnement de navigation d'un véhicule autonome, le véhicule autonome étant équipé d'un moyen de contrôle autonome. Le dispositif comprend des éléments matériels et/ou logiciels mettant en œuvre le procédé tel que défini précédemment, notamment des éléments matériels et/ou logiciels conçus pour mettre en œuvre le procédé selon l'invention, et/ou le dispositif comprenant des moyens de mettre en œuvre le procédé tel que défini précédemment.

L'invention porte en outre sur un véhicule autonome comprenant un dispositif de modélisation d'un environnement de navigation d'un véhicule autonome tel que défini précédemment.

L'invention porte également sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur. L'invention porte également sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment. L'invention porte encore sur un support d'enregistrement lisible par ordinateur comprenant des instructions qui, lorsqu'elles sont exécutées par un ordinateur, conduisent celui-ci à mettre en œuvre le procédé tel que défini précédemment.

L'invention porte encore sur un signal d'un support de données, portant le produit programme d'ordinateur tel que défini précédemment.

Le dessin annexé représente, à titre d'exemple, un mode de réalisation d'un dispositif de modélisation d'un environnement de navigation d'un véhicule automobile.
[Fig. 1] La figure 1 représente un véhicule équipé d'un dispositif de modélisation.
[Fig. 2] La figure 2 illustre schématiquement différents niveaux de décisions à prendre par le véhicule autonome.
[Fig. 3] La figure 3 illustre le séquencement des échanges entre les composants du dispositif de modélisation.
[Fig. 4] La figure 4 représente un ordinogramme d'un mode d'exécution d'un procédé de modélisation.
[Fig. 5] La figure 5 illustre une première situation dans laquelle le procédé de modélisation met en œuvre une prédiction.
[Fig. 6] La figure 6 illustre une deuxième situation dans laquelle le procédé de modélisation met en œuvre une prédiction.

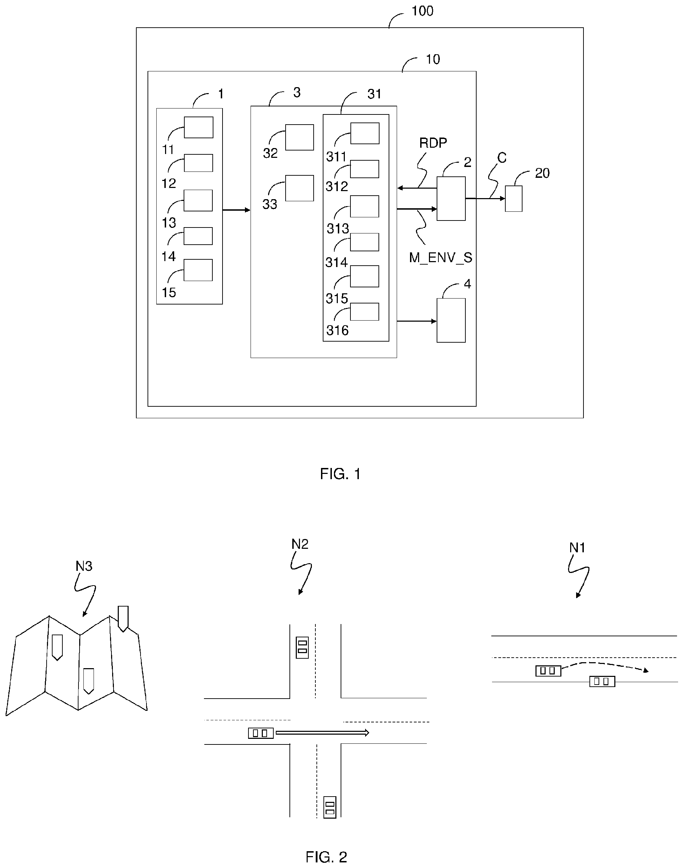

Un exemple d'un véhicule automobile 100 équipé d'un mode de réalisation d'un dispositif de modélisation d'un environnement de navigation d'un véhicule automobile est décrit ci-après en référence à la figure 1.

Le véhicule automobile 100 peut être un véhicule automobile de n'importe quel type, notamment un véhicule de tourisme, un véhicule utilitaire, un camion ou encore un véhicule de transport en commun tel qu'un bus ou une navette. Selon le mode de réalisation décrit, le véhicule automobile 100 est un véhicule autonome et sera désigné "véhicule autonome" dans la suite de la description.

Cette illustration est donc faite à titre non limitatif. Notamment le véhicule automobile pourrait être un véhicule non autonome, équipé d'un système d'aide à la conduite, notamment un système d'aide à la conduite correspondant à un niveau supérieur ou égal au niveau 2 d'autonomie, c'est-à-dire correspondant à une autonomie partielle du véhicule.

Le véhicule autonome 100 se déplace dans un environnement donné et sur un itinéraire donné IT. Le véhicule autonome 100 comprend un système d'aide à la conduite 10 et un moyen de contrôle autonome 20 du véhicule autonome 100.

Le système d'aide à la conduite 10 transmet une commande de déplacement C du véhicule autonome 100 au moyen de contrôle autonome 20. La commande de déplacement C peut comprendre une commande de déplacement longitudinal et/ou une commande de déplacement latéral. La commande de déplacement longitudinal peut comprendre une première consigne de couple destinée à un groupe motopropulseur du véhicule et/ou une deuxième consigne de couple destinée à un actionneur de freins du véhicule. La commande de déplacement latéral comprend un angle de rotation des roues directrices du véhicule autonome 100.

Le système d'aide à la conduite 10 comprend notamment les éléments suivants :
- des moyens de perception de l'environnement 1,
- un module de décision 2,
- une unité de calcul 3 comprenant un microprocesseur 31, une mémoire électronique locale 32 et des interfaces de communication 33 permettant au microprocesseur de communiquer avec les moyen de perception 1 et le module de décision 2.

Optionnellement, le système d'aide à la conduite 10 peut comprendre une interface homme-machine 4, dédiée à l'affichage ou la transmission d'alertes concernant la cohérence des données reçues des moyens de perception 1.

Dans la suite du document, le terme « donnée » est utilisé pour désigner une donnée brute reçue des moyens de perception de l'environnement 1, et le terme « information » est utilisé pour désigner une interprétation construite à partir d'une agrégation de données.

L'interprétation est effectuée dans l'unité de calcul 3. Elle permet, par exemple, d'identifier des objets d'intérêt (véhicules, piétons, obstacles, panneaux routiers) dans l'environnement du véhicule ego.

Les moyens de perception 1 de l'environnement peuvent comprendre tout ou partie des moyens suivants :
- des moyens d'observation 11 de l'état du véhicule, et/ou
- des moyens de perception 12 de l'environnement proche du véhicule, et/ou
- des moyens de géolocalisation 13 du véhicule, et/ou
- des moyens de communication 14 du véhicule avec une infrastructure routière et/ou avec d'autres véhicules, et/ou
- des moyens 15 de connexion à internet.

Les moyens d'observation 11 de l'état du véhicule peuvent comprendre un moyen d'observation d'un réseau de données internes au véhicule, par exemple de type bus CAN. Les données transmises via le réseau de données internes peuvent comprendre par exemple des mesures instantanées de vitesse et/ou accélération et/ou jerk du véhicule autonome 100, ou encore l'angle et la vitesse de rotation du volant, l'état des pédales de frein ou d'accélération...

Les moyens de perception 12 de l'environnement proche du véhicule peuvent comprendre des radars et/ou des lidars et/ou des caméras. D'autres modes de réalisation des moyens de perception 12 sont envisageables.

Les moyens de géolocalisation 13 du véhicule peuvent comprendre une carte de navigation numérique et des données issues d'un système de localisation, par exemple de type GPS, permettant au véhicule autonome de se localiser sur la carte de navigation numérique, et donc d'accéder à des informations relatives au réseau routier, notamment à une description topologique et géométrique du réseau routier. Les informations relatives au réseau routier peuvent en outre comprendre des informations sémantiques. Il peut s'agir par exemple de la présence d'un panneau indiquant une règle à suivre sur une portion de route (vitesse maximale, interdiction de doubler), ou d'un panneau indiquant la présence d'un danger (risque d'animaux, d'éboulements, ...).

Les moyens de communication 14 du véhicule avec une infrastructure routière et/ou avec d'autres véhicules permettent également d'obtenir des données sur un ensemble d'objets perçus par les équipements d'infrastructure routière et/ou les autres véhicules. Les données comprennent notamment des données de classification des objets et leurs dimensions, leur position ainsi que les vitesses associées.

Les moyens 15 de connexion à internet permettent par ailleurs d'obtenir des données contextuelles telles que la météo, l'état des routes et l'état du trafic

Pour contrôler le véhicule autonome 100, notamment pour déterminer son déplacement, le module de décision 2 prend continuellement des décisions. Parmi ces décisions, certaines sont destinées à être mises en œuvre à travers des commandes C transmises au moyen de contrôle autonome 20 du véhicule autonome.

De façon générale, le terme de « décision » relatif à une action peut être défini comme l'issue d'une délibération portant sur un acte volontaire d'effectuer ladite action ou de ne pas effectuer ladite action.

Selon cette définition, on distingue donc :
- l'action sur laquelle porte la décision,
- la décision en elle-même, qui correspond au choix d'effectuer ou non l'action.

Dans ce document, l'action sur laquelle porte une décision peut être, par exemple, de doubler un véhicule, de continuer dans la même direction, de freiner pour éviter un obstacle, de modifier son itinéraire.

Afin de déterminer un choix d'effectuer ou non une action, le module de décision 2 peut transmettre une requête d'informations à l'unité de calcul 3.

Dans la suite du document, :
- une décision faisant l'objet d'une requête d'information est nommée « décision à prendre »,
- une requête d'informations, également nommée requête d'informations RDP, est une demande d'informations relatives à une action sur laquelle porte une décision, lesdites informations permettant une prise de décision par le module de décision 2.

Dans le mode de réalisation illustré par la figure 2, à chaque instant t, le module de décision 2 est susceptible de déterminer des décisions à prendre selon trois niveaux :
- un premier niveau de décision N1 dit opérationnel portant sur des décisions à court terme, par exemple des décisions à prendre entre l'instant présent t et un instant futur de t + 1 seconde.
- une deuxième niveau de décision N2 dit tactique portant sur des décisions à moyen terme, par exemple des décisions à prendre entre l'instant t + 1 seconde et l'instant t + 10 minutes,
- un troisième niveau de décision dit stratégique portant sur des décisions à long terme N3, par exemple des décisions à prendre dans plus de 10 minutes par rapport à l'instant présent.

Le premier niveau de décision N1 détermine la réactivité du véhicule vis-à-vis de son environnement immédiat, comme par exemple le suivi précis d'une trajectoire, ou l'évitement d'obstacles. Le module de décision 2 détermine en permanence des décisions du premier niveau. Ce sont des décisions qui doivent se prendre sous quelques centaines de millisecondes maximum.

Le deuxième niveau de décision N2 concerne les manœuvres, comme par exemple l'engagement du véhicule autonome 100 dans une intersection, en fonction des règles de priorité et de la présence d'autres usagers de la route circulant sur ladite intersection, ou s'approchant de ladite intersection. Ces décisions sont prises ponctuellement et correspondent à un ensemble de situations bien définies.

Le troisième niveau de décision N3 concerne le déplacement global du véhicule. Par exemple, pour un véhicule autonome, il peut s'agir de déterminer un itinéraire reliant un point A à un point B. Ce sont des décisions qui dépendent directement de la mission du véhicule, et qui sont prises plutôt rarement (1 fois en début de mission, et parfois en cours de mission).

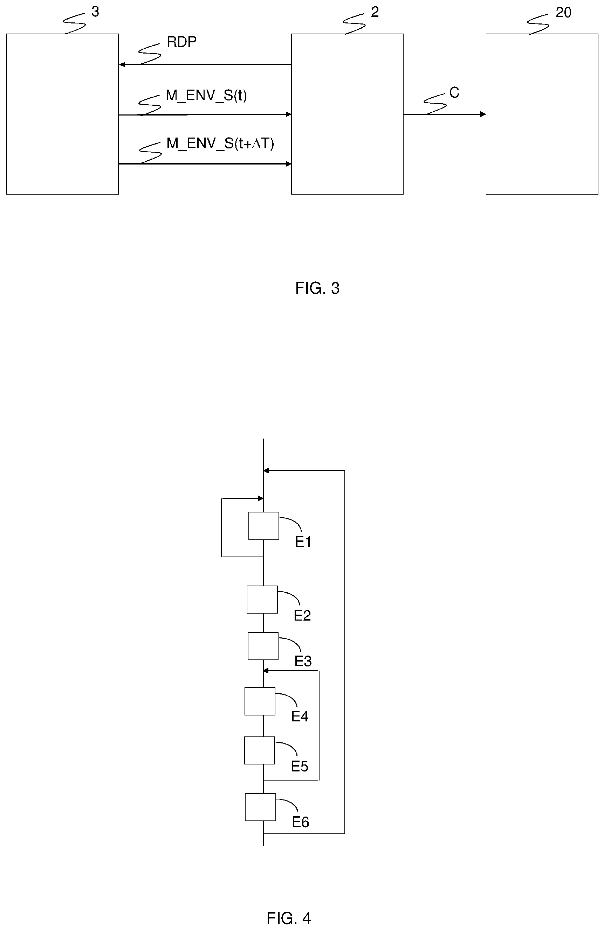

La figure 3 illustre le déroulement d'une prise de décision par le véhicule autonome, c'est-à-dire le séquencement des échanges entre l'unité de calcul 3, le module de décision 2 et le moyen de contrôle autonome 20 du véhicule autonome 100.

A un instant donné t, une décision à prendre DP est définie par le module de décision 2, notamment en fonction de l'itinéraire IT sur lequel le véhicule autonome est commandé pour se déplacer.

Avant d'être transmise au moyen de contrôle autonome 20 sous la forme d'une commande C, la décision à prendre DP fait l'objet d'au moins un échange d'informations entre le module de décision 2 et l'unité de calcul 3.

L'échange d'information comprend :
- un premier envoi, du module de décision 2 vers l'unité de calcul 3, d'une requête RDP d'informations relatives à une décision à prendre DP issue du module de décision 2, puis
- un deuxième envoi, de l'unité de calcul 3 vers le module de décision 2, d'un modèle environnemental sélectif M_ENV_S(t), le modèle environnemental M_ENV_S(t) étant défini à l'instant t et en fonction de la décision à prendre DP, puis
- optionnellement, un troisième envoi de l'unité de calcul 3 vers le module de décision 2 d'un modèle environnemental sélectif M_ENV_S(t+Δt), le modèle environnemental M_ENV_S(t+Δt) étant défini à un instant t+Δt et en fonction de la décision à prendre DP,
- puis un quatrième envoi, du module de décision 2 vers le moyen de contrôle autonome 20, d'une commande C pour déplacer le véhicule de sorte à appliquer la décision DP.

Dans la suite du document, une requête d'informations relatives à une décision à prendre transmise par le module de décision 2 à l'unité de calcul 3 est nommée « requête d'informations RDP ».

L'unité de calcul est apte à recevoir une requête d'informations RDP issue du module de décision et à créer un modèle environnemental spécifique M_ENV_S du véhicule autonome 100, le modèle environnemental spécifique M_ENV_S comprenant les informations nécessaires à l'évaluation de la décision à prendre DP par le module de décision 2, relativement à la situation dans laquelle le véhicule se trouve actuellement.

Dans la suite du document, le terme « situation d'un véhicule » est utilisé pour désigner une sélection d'éléments de la scène de conduite parmi tous les éléments qui peuvent être perçus via les moyens de perception 1. Un élément peut être un autre usager de la route, un objet, une surface, une voie de navigation, etc... Les éléments de la scène de conduite sont sélectionnés en fonction de leur pertinence par rapport à la décision à prendre DP. La situation dépend également de l'itinéraire IT que le véhicule doit suivre. Par exemple, lors du franchissement d'une intersection, la situation d'un véhicule diffère selon qu'il doive aller tout droit, ou tourner à gauche. En effet, selon la direction que le véhicule doit prendre, la situation du véhicule ne tiendra pas compte des mêmes usagers se situant dans la zone de l'intersection. La situation du véhicule peut également comprendre les relations entre les différents éléments de la scène de conduite. Par exemple, la situation peut comprendre un lien entre un obstacle et un véhicule environnant, le véhicule environnant étant alors susceptible de modifier sa trajectoire pour éviter l'obstacle ce qui peut interférer avec les décisions du véhicule autonome 100.

Le modèle environnemental spécifique M_ENV_S comprend les informations nécessaires pour modéliser la situation du véhicule relativement à une décision à prendre DP. L'analyse de la requête d'informations RDP par l'unité de calcul 3 comprend donc une détermination d'une sélection d'informations ou paramètres à renseigner. A partir des données issues des moyens de perception 1, et de la sélection de paramètres à renseigner, l'unité de calcul 3 construit un modèle environnemental sélectif M_ENV_S de l'environnement du véhicule autonome 100.

Dans le mode de réalisation de l'invention, le calculateur 31 permet d'exécuter un logiciel comprenant les modules suivants qui communiquent entre eux :
- un module 311 de définition d'un modèle environnemental global M_ENV_G du véhicule autonome 100, qui communique avec les moyens de perception 1 de l'environnement, le module de décision 2 et l'interface homme-machine 4,
- un module 312 de réception d'une requête d'informations RDP relatives à une décision à prendre DP, qui communique avec le module de décision 2,
- un module 313 de détermination d'une sélection d'informations BP ou paramètres à renseigner,
- un module 314 d'acquisition de ladite sélection d'informations pour constituer un modèle environnemental sélectif M_ENV_S,
- un module 315 de détermination d'un indice d'intégrité associé à chacune des informations du modèle environnemental M_ENV_S, et
- une étape 316 de transmission de la sélection d'informations M_ENV_S, qui collabore avec le module de décision 2.

Un mode d'exécution du procédé de commande d'un véhicule autonome est décrit ci-après en référence à la figure 3. Le procédé comprend six étapes E1 à E6.

Dans la première étape E1, on définit un modèle environnemental global M_ENV_G du véhicule autonome 100 comprenant un ensemble d'informations déterminées à partir des données fournies par les moyens de perception de l'environnement.

Le modèle environnemental global M_ENV_G est construit selon les objectifs suivants :
- fournir un ensemble d'informations suffisamment précises et complètes sur l'environnement du véhicule autonome pour permettre le fonctionnement du module de décision 2, notamment pour permettre l'identification de décisions à prendre,
- garantir la cohérence des informations.

A cet effet, un indice d'intégrité calculé IC est attribué à chaque information du modèle M_ENV_G. Le calcul de l'indice IC peut prendre en compte un indice d'intégrité dit initial d'une donnée, l'indice d'intégrité initial étant fourni par le moyen de perception de ladite donnée.

L'indice IC prend également en compte la cohérence des données. En particulier, pour chaque donnée pouvant être fournie par au moins deux moyens de perception distincts et indépendants, l'indice IC est déterminé en fonction de l'écart entre les mesures respectives de chacun des moyens de perception, et/ou en fonction de l'indice de confiance attribué à chacune des mesures.

Un contrôle de cohérence porte en outre sur l'évolution temporelle de chaque donnée. Par exemple, l'apparition ou la disparition soudaine d'un objet ou encore une trajectoire très improbable d'un élément de la scène sont détectées. Par exemple, un contrôle de cohérence peut porter sur l'ordre de grandeur de la vitesse de déplacement des véhicules ou des piétons.

Un contrôle de cohérence peut porter plus largement sur des limites de fonctionnement du système d'aide à la conduite 10. En effet, le système d'aide à la conduite 10 est défini pour fonctionner dans un environnement de circulation vérifiant des critères bien précis, qui sont formalisés dans un document nommé ODD, en référence à l'acronyme anglais « Operational Design Domain ». Par exemple, le système d'aide à la conduite 10 pourrait avoir été conçu pour fonctionner dans un environnement maitrisé, dans lequel aucun piéton n'est supposé évoluer. Dans ce cas, le module de décision 2 n'est pas conçu pour être capable d'interagir avec des piétons ; en revanche le système de perception est capable de détecter des piétons. La présence d'un piéton sera donc détectée dans l'étape E1 comme étant incompatible avec l'environnement de circulation pour lequel le véhicule autonome 100 a été conçu.

La détection d'une incompatibilité dans les données ou informations peut déclencher l'envoi d'un message d'alerte vers le module de décision 2 et/ou vers l'interface homme machine 4. Le message d'alerte pourra préciser la ou les données incompatibles.

Ainsi, dans l'étape E1, à chaque réception d'une donnée issue des moyens de perception, on enrichit et on met à jour le modèle environnemental global M_ENV_G, puis on l'enregistre dans la mémoire 32.

Tant qu'aucune requête d'informations RDP n'est émise par le module de décision 2, on reboucle sur l'étape E1 de définition d'un modèle environnemental global M_ENV_G.

Lorsqu'une requête d'informations RDP est émise par le module de décision 2, on enchaine sur l'étape E2 de réception d'une requête d'informations relatives à une décision à prendre pour le contrôle du véhicule.

Dans l'étape E2, on analyse le contenu de la requête d'informations RDP reçue.

Avantageusement, une liste prédéfinie de décisions LD est enregistrée dans la mémoire 32. En effet, il existe un nombre fini de décisions qu'un véhicule peut être amené à prendre. Par exemple, au niveau tactique, une décision peut être un passage d'intersection, un changement de voie, le maintien sur la même voie de circulation...

Dans un mode de réalisation, la liste LD identifie chaque décision à prendre par un identifiant iDP, et la requête d'informations RDP comprend avantageusement un identifiant de décision iDP.

La requête d'informations RDP peut comprendre en outre une information spécifiant un niveau de décision : tactique, opérationnel ou stratégique.

La requête d'informations RDP peut également comprendre des informations concernant l'itinéraire IT suivi par le véhicule autonome 100.

Les différentes informations contenues dans la requête d'information RDP pourront être mémorisées dans la mémoire 32 et utilisées lors de l'exécution des étapes ultérieures E3 à E6.

Dans l'étape E3, on détermine une sélection d'informations nécessaires pour prendre la décision DP, la sélection étant un sous-ensemble de l'ensemble des informations contenues dans le modèle environnemental global M_ENV_G.

Avantageusement, la mémoire 32 comprend une table de correspondance entre, d'une part, un identifiant de décision à prendre iDP et, d'autre part, une liste contenant les informations nécessaires pour prendre la décision désignée par l'indice iDP. Cette table de correspondance permet ainsi de déterminer une liste BP d'informations qui sont nécessaires au module de décision 2 pour prendre la décision DP.

Dans la suite du document ladite liste d'informations BP est nommée par l'anglicisme "Blueprint". Un Blueprint BP est associé à chaque décision à prendre DP, c'est-à-dire à chaque identifiant de décision iDP. Il formalise et structure chaque information dont le module de décision 2 a besoin pour évaluer la décision et par la suite transmettre des commandes au moyen de contrôle autonome 20 du véhicule autonome 100. Un Blueprint peut être vu comme un formulaire vierge dont il faut remplir chaque champ, les champs à remplir étant spécifiques à chaque Blueprint, c'est-à-dire à chaque décision à prendre DP.

Un Blueprint peut dépendre du niveau de la décision (tactique, opérationnel ou stratégique). Notamment, pour une décision donnée, il peut exister un Blueprint par niveau de décision.

Par exemple, dans le cas d'une décision d'entrée sur une intersection, un premier Blueprint BP1 de niveau tactique définit les informations nécessaires à la prise de décision d'entrée sur l'intersection à un instant d'arrivée du véhicule au niveau de l'intersection. Ce Blueprint peut comprendre les informations suivantes :
- l'état du trafic sur la voie de conduite du véhicule autonome 100,
- la liste des zones d'intérêt (par exemple les autres voies d'entrée dans l'intersection) et l'état du trafic dans ces zones d'intérêt,
- la liste des véhicules prioritaires par rapport au véhicule autonome 100,
- la liste des véhicules non prioritaires par rapport au véhicule autonome 100,
- la présence de feux tricolores et l'état de ces feux tricolores.

Toujours dans le cas d'une décision d'entrée sur une intersection, un deuxième Blueprint BP2, différent du premier Blueprint BP1, pourra être défini pour le niveau opérationnel, et éventuellement un troisième Blueprint BP3, différent des premier et deuxième Blueprints BP1, BP2 pourra être défini au niveau stratégique. Par exemple, le Blueprint BP3 (niveau stratégique) pourrait prendre en compte des portions de route bouchées ou des routes barrées pouvant remettre en cause l'itinéraire calculé en début de mission.

La liste d'informations nécessaires, ou Blueprint, peut inclure une prédiction. Dans la suite du document, le terme de prédiction est utilisé pour désigner des événements prévisibles pouvant impacter les décisions à prendre par le véhicule autonome 100. Par exemple, une prédiction peut concerner un comportement prévisible d'un véhicule environnant qui pourrait impacter le comportement du véhicule autonome 100. Le terme « prédiction » ne concerne donc pas seulement la prédiction de trajectoire. Il peut également s'agir, par exemple, d'une prédiction d'intention d'un véhicule environnant, ou d'une prédiction d'un itinéraire d'un véhicule environnant.

La liste d'informations nécessaires pour prendre une décision DP peut comprendre un ensemble d'informations caractérisant la situation du véhicule après l'application de la décision à prendre DP.

La prédiction peut alors prendre en compte l'itinéraire IT fourni par le module de décision 2, en association à la décision à prendre DP.

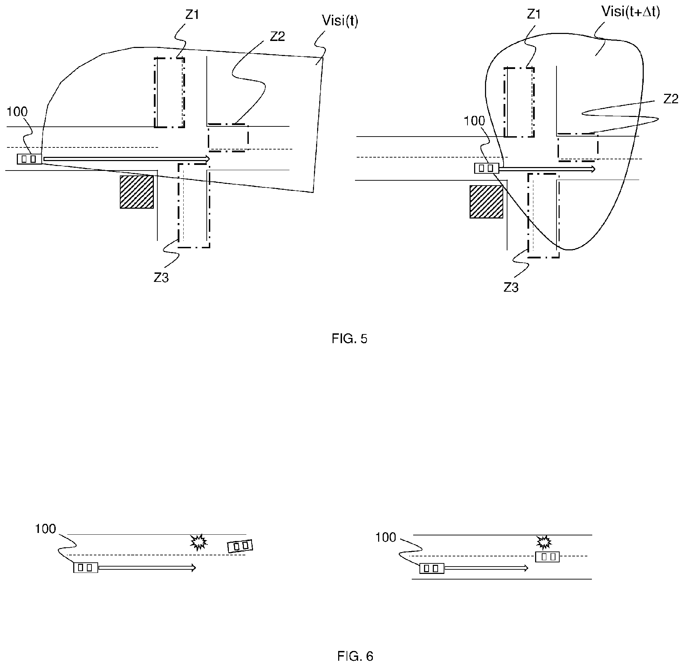

La situation représentée par la figure 5 illustre l'intérêt d'inclure une prédiction dans le Blueprint associé à une décision à prendre DP.

La figure 5 comprend
- un premier schéma (situé sur la partie gauche de la figure), représentant le véhicule autonome 100 à un instant t, alors qu'il se déplace en direction d'un croisement qu'il doit franchir en ligne droite, et
- un deuxième schéma (situé sur la partie droite de la figure), représentant le véhicule autonome 100 à un instant t+Δt, alors qu'il a presque atteint le croisement.

Trois zones d'intérêt Z1, Z2, Z3 pour le véhicule autonome 100, sont représentées sur chacun des schémas, ainsi que la visibilité Visi(t) ou Visi(t+Δt) du véhicule autonome sur ces trois zones d'intérêt, respectivement aux instants t et t+Δt.

Sur le premier schéma, représentant la situation du véhicule autonome à l'instant t, un bâtiment situé à l'angle du croisement occulte la visibilité Visi(t) sur la zone d'intérêt Z3 située sur la droite du véhicule autonome 100.

Sur le deuxième schéma, représentant la situation du véhicule autonome à t+Δt; la zone d'intérêt Z3 située sur sa droite est maintenant dans la zone de visibilité Visi(t+Δt).

Ainsi, bien que des informations concernant la zone d'intérêt Z3 soient manquantes à l'instant t, la prédiction à t+Δt permet au module de décision de s'assurer qu'à l'arrivée du véhicule autonome 100 sur le croisement, toutes les zones d'intérêts seront couvertes par les moyens de perception 1.

La prédiction permet également au module de décision de d'anticiper sur des incidents qui pourraient se dérouler après l'application de la décision DP.

Par exemple, dans la situation illustrée par la figure 6 :
- à l'instant t d'évaluation de la décision à prendre, représenté par le schéma situé à gauche, la voie de navigation du véhicule autonome 100 est totalement libre, et un deuxième véhicule circule sur la voie opposée,
- à l'instant t+Δt de prédiction, pour éviter un obstacle, le deuxième véhicule s'est déporté sur la voie du véhicule autonome 100 et crée un risque de collision.

Ainsi, bien que la situation soit sûre à l'instant t, il est pertinent pour le module de décision 2 de savoir que le deuxième véhicule va probablement contourner l'obstacle et empiéter la voie du véhicule autonome 100, et d'estimer quand cela risque de se produire.

Lorsque la sélection d'informations associées à la décision à prendre DP, autrement dit le Blueprint, est déterminée, on enchaine sur l'étape E4.

Dans l'étape E4, on acquiert ladite sélection d'informations à partir des données issues des moyens de perception de l'environnement. En d'autres termes, on renseigne le Blueprint, qui est en quelque sorte un formulaire contenant des champs à renseigner, à partir des informations du modèle environnemental M_ENV_G.

Dans un mode de réalisation avantageux, l'acquisition des données s'exécute selon la même méthode, quel que soit le Blueprint.

Dans ce mode de réalisation, un ensemble de fonctions unitaires est défini. A titre d'exemple non limitatif, des fonctions unitaires peuvent être respectivement définies pour
- identifier des zones d'intérêt,
- identifier un véhicule qui précède le véhicule autonome 100 sur sa voie de circulation,
- identifier le ou les véhicules ayant priorité sur le véhicule autonome 100 dans une intersection,
- prédire une trajectoire d'un véhicule environnant...

Chaque fonction unitaire utilise des informations du modèle environnemental global M_ENV_G pour construire une représentation structurée d'une partie de la situation dans laquelle se trouve le véhicule autonome 100.

Pour remplir un Blueprint, il est nécessaire d'exécuter une sélection de fonctions unitaires, chaque fonction unitaire permettant de renseigner une information du Blueprint. De plus il peut être nécessaire d'exécuter les fonctions unitaires dans un ordre bien défini. Par exemple, pour renseigner la représentation d'une intersection au niveau tactique, il peut être nécessaire d'identifier les zones d'intérêt avant d'identifier les usagers de la route ayant priorité sur le véhicule autonome 100.

A cet effet, une feuille de route est associée à chaque Blueprint pour décrire l'ordre d'exécution des fonctions unitaires permettant de renseigner les données du Blueprint. Une fonction de supervision (ou orchestrateur) exécutera les fonctions unitaires dans l'ordre défini par la feuille de route.

Par exemple, lorsque la décision à prendre DP concerne l'engagement du véhicule autonome 100 dans une intersection, la feuille de route peut déterminer l'ordre suivant pour l'exécution des fonctions unitaires :
- obtenir l'état du véhicule autonome 100 (position, vitesse, etc...),
- obtenir l'état du champ de vision du système de perception,
- obtenir l'information sur la présence d'autres usagers de la route autour du véhicule autonome 100, ainsi que leur état,
- obtenir les zones d'intérêt de l'intersection, leur position et/ou leur distribution spatiale,
- contextualiser les zones d'intérêt (savoir si elles sont visibles, cachées, hors de portée, etc.),
- contextualiser les autres usagers de la route présents dans les zones d'intérêt,
- identifier les usagers de la route à qui on doit la priorité,
- identifier les usagers de la route qui nous doivent la priorité,
- ...

L'ensemble de fonctions unitaires est évolutif, c'est-à-dire que chacune des fonctions peut être modifiée sans remettre en question l'architecture globale du système. De plus, de nouvelles fonctions peuvent être ajoutées, par exemple pour prendre en compte de nouvelles situations.

Dans un mode de réalisation préférentiel, l'étape E4 d'acquisition et l'étape E5 de détermination d'un indice d'intégrité s'exécutent successivement pour chaque fonction unitaire. Autrement dit, pour chaque fonction unitaire on reboucle sur les étapes E4 et E5. Chaque fonction unitaire peut par exemple calculer un indice d'intégrité à partir d'un indice d'intégrité associé à chaque information du modèle environnemental global M_ENV_G défini dans l'étape E1.

Dans ce mode de réalisation, à chaque étape de la feuille de route, l'orchestrateur est capable d'estimer la qualité et la complétude des informations collectées par la fonction unitaire exécutant ladite étape.

A partir de l'indice d'intégrité retourné par chaque fonction unitaire, l'orchestrateur met à jour un indice d'intégrité global.

L'orchestrateur peut par ailleurs analyser si les indices d'intégrité retournés par les fonctions unitaires exécutées à ce stade de la feuille de route sont suffisamment élevés pour poursuivre l'exécution de la feuille de route. Cette analyse est essentielle, car si l'une des fonctions unitaires collecte des informations incomplètes ou insuffisamment précises, il est alors possible que les fonctions unitaires suivantes en soient impactées.

Selon les situations, le défaut d'intégrité des informations peut être géré de différentes façons par l'orchestrateur :
- la feuille de route peut être intégralement exécutée, puis le module de décision 2 peut être informé du faible niveau d'intégrité des informations via l'indice d'intégrité global calculé par l'orchestrateur, ou
- l'orchestrateur peut appliquer des conditions d'arrêt de l'exécution de la feuille de route ; par exemple si l'indice d'intégrité global est inférieur à un seuil d'intégrité prédéfini associé au Blueprint, l'orchestrateur peut interrompre le déroulement de la feuille de route.

A l'issue de l'exécution de la feuille de route, les informations recueillies par les fonctions unitaires constituent ensemble un modèle environnemental sélectif M_ENV_S.

Dans l'étape E6, on fournit le modèle environnemental sélectif M_ENV_S au module de décision 2, le modèle M_ENV_S comprenant les indices d'intégrité unitaires et global associés aux données.

Finalement, le procédé de modélisation selon l'invention met en œuvre une interprétation efficace et fiable de la situation du véhicule autonome 100 en fonction d'une décision à prendre par le véhicule autonome 100.

En effet,
- la modélisation selon l'invention ne prend en compte que les informations nécessaires à la prise de décision,
- elle garantit que les informations identifiées comme nécessaires seront les plus complètes possibles et que la fiabilité des informations sera connue,
- une décision à prendre donnera lieu à des modélisations différentes selon l'échéance à laquelle la décision doit être prise, c'est-à-dire selon le niveau de décision (opérationnel, tactique ou stratégique),
- la modélisation pourra comprendre une prédiction permettant d'anticiper sur des incidents qui pourraient se dérouler après l'application de la décision à prendre,
- la cohérence des informations est vérifiée selon différents axes : cohérence d'une information issue de plusieurs sources, cohérence temporelle de l'information, et cohérence de l'information avec limites de fonctionnement du système.

De plus, le procédé de modélisation proposé est générique et peut être adapté aux besoins de différents systèmes d'aide à la conduite et/ou de conduite autonome. En effet, le procédé peut être paramétré à différents niveaux :
- un premier niveau de paramétrage global est effectué au niveau de la liste LD des décisions possibles,
- un deuxième niveau de paramétrage par décision est effectué par l'association d'un Blueprint à chaque décision possible (c'est-à-dire un ensemble d'informations à renseigner) avec la possibilité, pour une même décision, d'utiliser un Blueprint différent par niveau de décision (opérationnel, tactique et stratégique),
- un troisième niveau de paramétrage est effectué via la définition d'un ensemble de fonctions unitaires, chaque fonction unitaire permettant d'acquérir une information et de lui associer un indice d'intégrité,
- un quatrième niveau de paramétrage concerne l'ordre d'acquisition des informations c'est-à-dire l'ordre d'exécution des fonctions unitaires, et le calcul d'un indice d'intégrité global des informations. Le quatrième niveau de paramétrage est réalisé via la définition d'une feuille de route associée à chaque Blueprint.

Cette architecture modulaire permet de paramétrer simplement la modélisation en fonction de chaque décision, en modifiant la liste des décisions et/ou le ou les Blueprints associés à chaque décision et/ou la feuille de route associées à chaque Blueprint et/ou les fonctions unitaires utilisées pour acquérir les informations.

Naturellement, comme cela ressort de la description précédente, la modélisation mise en œuvre doit se comprendre au sens concret de compréhension automatique de l'environnement d'un véhicule, dans le but d'assister sa conduite de manière fiable, robuste, optimisée. Il ne s'agit donc pas d'une construction abstraite ou virtuelle. Autrement dit, l'invention doit être comprise comme un procédé et un dispositif d'aide à la conduite d'un véhicule automobile, autonome ou pas, qui met en œuvre le procédé de modélisation d'un environnement de navigation tel que décrit précédemment, afin de prendre en compte cet environnement dans une ou plusieurs décisions autonomes de guidage d'un véhicule, voire d'assistance à la conduite d'un conducteur d'un véhicule.

## Revendications

1. Procédé de modélisation d'un environnement de navigation d'un véhicule (100) équipé de moyens de perception de l'environnement (1), d'un module de décision (2) et d'un moyen de contrôle autonome du véhicule (20), comprenant :
- une étape (E1) de définition d'un modèle environnemental global (M_ENV_G) du véhicule comme étant un ensemble d'informations structuré construit à partir de données fournies par les moyens de perception de l'environnement (1),
et **caractérisé en ce qu'**il comprend en outre :
- une étape (E2) de réception d'une requête (RDP) d'informations relatives à une décision à prendre (DP) pour le contrôle du véhicule par le moyen de contrôle autonome (20), émise par le module de décision (2),
- une étape (E3) de détermination, parmi l'ensemble d'informations structuré définissant le modèle environnemental, d'une sélection d'informations à renseigner (BP) pour prendre ladite décision (DP),
- une étape (E4) de renseignement des informations de ladite sélection à partir du modèle environnemental global (M_ENV_G),
- une étape (E5) de détermination d'un indice d'intégrité associé à chacune des informations de ladite sélection,
- une étape (E6) de fourniture audit module de décision (2) d'un modèle environnemental sélectif (M_ENV_S) contenant les informations de ladite sélection et les indices d'intégrité correspondants.

2. Procédé de modélisation d'un environnement de navigation d'un véhicule autonome selon la revendication précédente, **caractérisé en ce qu'**il comprend une étape d'acquisition d'au moins une première information de ladite sélection d'informations avec un premier moyen de perception de l'environnement et avec un deuxième moyen de perception de l'environnement, et **en ce que** l'indice d'intégrité associé à ladite au moins une première information est déterminé en fonction de la cohérence entre des données fournies par le premier moyen de perception et le deuxième moyen de perception.

3. Procédé de modélisation d'un environnement de navigation d'un véhicule autonome selon l'une des revendications précédentes, **caractérisé en ce qu'**il comprend une étape d'acquisition d'au moins une deuxième information de ladite sélection d'informations avec un moyen de perception de l'environnement à un premier instant et à un deuxième instant postérieur au premier instant, et **en ce que** l'indice d'intégrité associé à ladite au moins une deuxième information est déterminé en fonction de la cohérence entre les données fournies par le moyen de perception au premier instant et au deuxième instant.

4. Procédé de modélisation d'un environnement de navigation d'un véhicule autonome selon l'une des revendications précédentes, **caractérisé en ce que** la décision à prendre (DP) comprend une action donnée à appliquer par le véhicule autonome à une échéance donnée, l'échéance donnée pouvant être à court terme, à moyen terme, ou à long terme,
**en ce que**, pour une même action donnée, l'étape (E3) de détermination détermine
- une première sélection (BP1) d'information à renseigner si l'échéance donnée est à court terme, ou
- une deuxième sélection (BP2) d'information à renseigner si l'échéance donnée est à moyen terme, ou
- une troisième sélection (BP3) d'information à renseigner si l'échéance données est à long terme,
et **en ce que** les première, deuxième et troisième sélections diffèrent les unes des autres.

5. Procédé de modélisation d'un environnement de navigation d'un véhicule autonome selon l'une des revendications précédentes, **caractérisé en ce qu'**il comprend une sous-étape de fourniture audit module de décision (2) d'un modèle environnemental sélectif (M_ENV_S) comprenant un ensemble d'informations caractérisant la situation du véhicule après l'application de la décision à prendre (DP).

6. Procédé de modélisation d'un environnement de navigation d'un véhicule autonome selon l'une des revendications précédentes, **caractérisé en ce qu'**il comprend :
- un paramétrage d'une liste finie de décisions (LD) prises en compte par le procédé,
- un paramétrage d'une sélection d'informations à renseigner (BP) pour chaque décision de la liste finie de décision, et un paramétrage de l'ordre dans lequel lesdites informations doivent être renseignées,
- un paramétrage d'au moins une méthode de renseignement de chaque information à renseigner.

7. Dispositif (10) de modélisation d'un environnement de navigation d'un véhicule autonome, le véhicule autonome étant équipé d'un moyen de contrôle autonome (20), le dispositif comprenant des éléments (1, 2, 3, 4, 10, 11, 12, 13, 14, 15, 20, 31, 32, 33, 311, 312, 313, 314, 315, 316) matériels et/ou logiciels mettant en œuvre le procédé selon l'une des revendications 1 à 5, notamment des éléments matériels (1, 2, 3, 4, 10, 11, 12, 13, 14, 15, 20, 31, 32, 33) et/ou logiciels conçus pour mettre en œuvre le procédé selon l'une des revendications précédentes, et/ou le dispositif comprenant des moyens de mettre en œuvre le procédé selon l'une des revendications précédentes.

8. Produit programme d'ordinateur comprenant des instructions de code de programme enregistrées sur un support lisible par ordinateur pour mettre en œuvre les étapes du procédé selon l'une quelconque des revendications 1 à 6 lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé selon l'une quelconque des revendications 1 à 6.

9. Support d'enregistrement de données, lisible par un ordinateur, sur lequel est enregistré un programme d'ordinateur comprenant des instructions de code de programme de mise en œuvre du procédé selon l'une des revendications 1 à 6 ou selon la revendication 8 ou support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 6.

10. Signal d'un support de données, portant le produit programme d'ordinateur selon la revendication 8.

## Patentansprüche

1. Verfahren zur Modellierung einer Navigationsumgebung eines Fahrzeugs (100), das mit Mitteln zur Wahrnehmung der Umgebung (1), einem Entscheidungsmodul (2) und einem Mittel zur autonomen Steuerung des Fahrzeugs (20) ausgerüstet ist, beinhaltend:
- einen Schritt (E1) des Definierens eines globalen Umgebungsmodells (M_ENV_G) des Fahrzeugs in Form eines strukturierten Satzes von Informationen, der anhand von Daten erstellt wird, die durch die Mittel zur Wahrnehmung der Umgebung (1) bereitgestellt werden,
und **dadurch gekennzeichnet, dass** es ferner Folgendes beinhaltet:
- einen Schritt (E2) des Empfangens einer Anforderung (RDP) von Informationen bezüglich einer für die Steuerung des Fahrzeugs durch das autonome Steuerungsmittel (20) zu treffenden Entscheidung (DP), die durch das Entscheidungsmodul (2) ausgegeben wird,
- einen Schritt (E3) des Bestimmens, innerhalb des strukturierten Satzes von Informationen, der das Umgebungsmodell definiert, einer Auswahl von einzuholenden Informationen (BP) zum Treffen der Entscheidung (DP),
- einen Schritt (E4) des Einholens der Informationen der Auswahl anhand des globalen Umgebungsmodells (M_ENV_G),
- einen Schritt (E5) des Bestimmens eines Integritätsindexes, der mit jeder der Informationen der Auswahl assoziiert ist,
- einen Schritt (E6) des Bereitstellens, für das Entscheidungsmodul (2), eines selektiven Umgebungsmodells (M_ENV_S), das die Informationen der Auswahl und die entsprechenden Integritätsindizes enthält.

2. Verfahren zur Modellierung einer Navigationsumgebung eines autonomen Fahrzeugs nach dem vorhergehenden Anspruch, **dadurch gekennzeichnet, dass** es einen Schritt des Erfassens mindestens einer ersten Information der Auswahl von Informationen mit einem ersten Mittel zur Wahrnehmung der Umgebung und mit einem zweiten Mittel zur Wahrnehmung der Umgebung beinhaltet und dass der mit der mindestens einen ersten Information assoziierte Integritätsindex in Abhängigkeit von der Kohärenz zwischen den durch das erste Wahrnehmungsmittel und das zweite Wahrnehmungsmittel bereitgestellten Daten bestimmt wird.

3. Verfahren zur Modellierung einer Navigationsumgebung eines autonomen Fahrzeugs nach einem der vorhergehenden Ansprüche, **dadurch gekennzeichnet, dass** es einen Schritt des Erfassens mindestens einer zweiten Information der Auswahl von Informationen mit einem Mittel zur Wahrnehmung der Umgebung zu einem ersten Zeitpunkt und zu einem nach dem ersten Zeitpunkt liegenden zweiten Zeitpunkt beinhaltet und dass der mit der mindestens einen zweiten Information assoziierte Integritätsindex in Abhängigkeit von der Kohärenz zwischen den durch das Wahrnehmungsmittel zu dem ersten Zeitpunkt und dem zweiten Zeitpunkt bereitgestellten Daten bestimmt wird.

4. Verfahren zur Modellierung einer Navigationsumgebung eines autonomen Fahrzeugs nach einem der vorhergehenden Ansprüche, **dadurch gekennzeichnet, dass** die zu treffende Entscheidung (DP) eine durch das autonome Fahrzeug innerhalb eines gegebenen Zeitfensters anzuwendende gegebene Aktion beinhaltet, wobei das Zeitfenster kurzfristig, mittelfristig oder langfristig sein kann,
dass, für eine gleiche gegebene Aktion, der Schritt (E3) des Bestimmens Folgendes bestimmt:
- eine erste Auswahl (BP1) von Informationen, die einzuholen sind, wenn das gegebene Zeitfenster kurzfristig ist, oder
- eine zweite Auswahl (BP2) von Informationen, die einzuholen sind, wenn das gegebene Zeitfenster mittelfristig ist, oder
- eine dritte Auswahl (BP3) von Informationen, die einzuholen sind, wenn das gegebene Zeitfenster langfristig ist,
und dass sich die erste, die zweite und die dritte Auswahl voneinander unterscheiden.

5. Verfahren zur Modellierung einer Navigationsumgebung eines autonomen Fahrzeugs nach einem der vorhergehenden Ansprüche, **dadurch gekennzeichnet, dass** es einen Teilschritt des Bereitstellens, für das Entscheidungsmodul (2), eines selektiven Umgebungsmodells (M_ENV_S) beinhaltet, das einen Satz von Informationen beinhaltet, der die Situation des Fahrzeugs nach der Anwendung der zu treffenden Entscheidung (DP) kennzeichnet.

6. Verfahren zur Modellierung einer Navigationsumgebung eines autonomen Fahrzeugs nach einem der vorhergehenden Ansprüche, **dadurch gekennzeichnet, dass** es Folgendes beinhaltet:
- Festlegen einer abgeschlossenen Liste von Entscheidungen (LD), die durch das Verfahren berücksichtigt werden,
- Festlegen einer Auswahl von Informationen (BP), die für jede Entscheidung der abgeschlossenen Liste von Entscheidungen einzuholen sind, und Festlegen der Reihenfolge, in der die Informationen einzuholen sind,
- Festlegen mindestens einer Methode zum Einholen jeder einzuholenden Information.

7. Vorrichtung (10) zur Modellierung einer Navigationsumgebung eines autonomen Fahrzeugs, wobei das autonome Fahrzeug mit einem autonomen Steuerungsmittel (20) ausgerüstet ist, wobei die Vorrichtung Hardware- und/oder Softwareelemente (1, 2, 3, 4, 10, 11, 12, 13, 14, 15, 20, 31, 32, 33, 311, 312, 313, 314, 315, 316), die das Verfahren nach einem der Ansprüche 1 bis 5 umsetzen, insbesondere Hardwareelemente (1, 2, 3, 4, 10, 11, 12, 13, 14, 15, 20, 31, 32, 33) und/oder Softwareelemente, die dazu ausgelegt sind, das Verfahren nach einem der vorhergehenden Ansprüche umzusetzen, beinhaltet, und/oder wobei die Vorrichtung Mittel zur Umsetzung des Verfahrens nach einem der vorhergehenden Ansprüche beinhaltet.

8. Computerprogrammprodukt, das Programmcodeanweisungen beinhaltet, die auf einem computerlesbaren Medium gespeichert sind, um die Schritte des Verfahrens nach einem der Ansprüche 1 bis 6 umzusetzen, wenn das Programm auf einem Computer läuft, oder Computerprogrammprodukt, das aus einem Kommunikationsnetz herunterladbar ist und/oder auf einem computerlesbaren Datenmedium gespeichert ist und/oder durch einen Computer ausführbar ist, **dadurch gekennzeichnet, dass** es Anweisungen beinhaltet, die bei Ausführung des Programms durch den Computer diesen dazu veranlassen, das Verfahren nach einem der Ansprüche 1 bis 6 umzusetzen.

9. Datenspeichermedium, das durch einen Computer gelesen werden kann und auf dem ein Computerprogramm gespeichert ist, das Programmcodeanweisungen zur Umsetzung des Verfahrens nach einem der Ansprüche 1 bis 6 oder nach Anspruch 8 beinhaltet, oder computerlesbares Speichermedium, das Anweisungen beinhaltet, die bei ihrer Ausführung durch einen Computer diesen dazu veranlassen, das Verfahren nach einem der Ansprüche 1 bis 6 umzusetzen.

10. Signal eines Datenmediums, das das Computerprogrammprodukt nach Anspruch 8 trägt.

## Claims

1. Method for modeling a navigation environment of a vehicle (100) equipped with environment perception means (1), a decision-making module (2) and an autonomous control means (20) for autonomously controlling the vehicle, comprising:
- a step (E1) of defining an overall environmental model (M_ENV_G) of the vehicle as being a set of structured information constructed from data provided by the environment perception means (1);
and **characterized in that** it furthermore comprises:
- a step (E2) of receiving a request (RDP) for information relating to a decision to be taken (DP) for controlling the vehicle by the autonomous control means (20), which request is transmitted by the decision-making module (2);
- a step (E3) of determining, from among the set of structured information defining the environmental model, a selection of information to be consulted (BP) in order to take said decision (DP);
- a step (E4) of consulting the information from said selection from the overall environmental model (M_ENV_G);
- a step (E5) of determining an integrity index associated with each item of information of said selection;
- a step (E6) of providing said decision-making module (2) with a selective environmental model (M_ENV_S) containing the information from said selection and the corresponding integrity indices.

2. Method for modeling a navigation environment of an autonomous vehicle according to the preceding claim, **characterized in that** it comprises a step of acquiring at least one first item of information from said selection of information using a first environment perception means and using a second environment perception means, and **in that** the integrity index associated with said at least one first item of information is determined as a function of the consistency between data provided by the first perception means and the second perception means.

3. Method for modeling a navigation environment of an autonomous vehicle according to any of the preceding claims, **characterized in that** it comprises a step of acquiring at least one second item of information from said selection of information using an environment perception means at a first instant and at a second instant after the first instant, and **in that** the integrity index associated with said at least one second item of information is determined as a function of the consistency between the data provided by the perception means at the first instant and at the second instant.

4. Method for modeling a navigation environment of an autonomous vehicle according to any of the preceding claims, **characterized in that** the decision to be taken (DP) comprises a given action to be applied by the autonomous vehicle on a given deadline, with the given deadline being able to be short-term, medium-term, or long-term,
**in that**, for the same given action, the determination step (E3) determines
- a first selection (BP1) of information to be consulted if the given deadline is short-term; or
- a second selection (BP2) of information to be consulted if the given deadline is medium-term; or
- a third selection (BP3) of information to be consulted if the given deadline is long-term,
and **in that** the first, second and third selections differ from each other.

5. Method for modeling a navigation environment of an autonomous vehicle according to any of the preceding claims, **characterized in that** it comprises a sub-step of providing said decision-making module (2) with a selective environmental model (M_ENV_S) comprising a set of information characterizing the situation of the vehicle after applying the decision to be taken (DP).

6. Method for modeling a navigation environment of an autonomous vehicle according to any of the preceding claims, **characterized in that** it comprises:
- configuring a finite list (LD) of decisions taken into account by the method;
- configuring a selection (BP) of information to be consulted for each decision of the finite list of decisions, and configuring the order in which said information must be consulted;
- configuring at least one method for consulting each item of information to be consulted.

7. Device (10) for modeling a navigation environment of an autonomous vehicle, the autonomous vehicle being equipped with an autonomous control means (20), the device comprising hardware and/or software elements (1, 2, 3, 4, 10, 11, 12, 13, 14, 15, 20, 31, 32, 33, 311, 312, 313, 314, 315, 316) implementing the method according to any of Claims 1 to 5, notably hardware and/or software elements (1, 2, 3, 4, 10, 11, 12, 13, 14, 15, 20, 31, 32, 33) designed to implement the method according to any of the preceding claims, and/or the device comprising means for implementing the method according to any of the preceding claims.

8. Computer program product comprising program code instructions stored on a computer-readable medium for implementing the steps of the method according to any one of Claims 1 to 6 when said program runs on a computer or computer program product that can be downloaded from a communication network and/or stored on a computer-readable data medium and/or can be executed by a computer, **characterized in that** it comprises instructions which, when the program is executed by the computer, cause the computer to implement the method according to any one of Claims 1 to 6.

9. Computer-readable data storage medium, which stores a computer program comprising program code instructions for implementing the method according to any of Claims 1 to 6 or according to Claim 8 or a computer-readable storage medium comprising instructions which, when they are executed by a computer, cause the computer to implement the method according to any one of Claims 1 to 6.

10. Signal from a data medium, conveying the computer program product according to Claim 8.
